# EUROPEAN PATENT APPLICATION

(11) **EP 2 275 749 A1**
(43) Date of publication of application: **19.01.2011**
(21) Application number: 09173584.5
(22) Date of filing: 21.10.2009
(51) Int. Cl.: F24F 3/14, F24F 13/20, F24F 13/32, B01D 53/04, B01D 53/26

(54) **Humdity eleminating case fixable to floor with suction cup**

(30) Priority: 16.06.2009 TR 200904692
(71) Applicant: Dinç, Saban, 34854 Istanbul (TR)
(72) Inventor: Dinç, Saban, 34854 Istanbul (TR)
(74) Representative: Iskender, Ibrahim

(57) **Abstract**

The invention is a humidity eliminating casing containing a grid cage (3) to place the humidity collecting chemical agent in the form of tablet in general, at least one porosity (3.1) on the surface of the said grid cage (3) to provide access of the humid air to the tablet, a liquid chamber (4) to store the waste liquid formed from the tablet dissolved by the humid air in time and a foot (5) located under the said liquid chamber (4) to support and carry the casing apparatus and it is **characterized in that** it consists of at least one adhesive disc (6) located on the said foot (5) in order to fix the humidity eliminating casing on the ground, a liquid discharge canal (3.4) in order to carry the waste liquid to the said liquid chamber (4), a discharge canal (3.2) in order to discharge the waste liquid from the said liquid chamber (4), a discharge canal cover (2) in order to provide discharge of the liquid from the said discharge canal (3.2) only when desired, a cover (5) to provide removal of the said humidity absorbing tablet from the grid cage (3) only when desired.

## Description

### The Related Art

The invention relates to embodiments of humidity eliminating apparatus.

The invention particularly relates to humidity eliminating apparatus with a casing containing a humidity eliminating material located therein or a chemical agent collecting the humidity in air and used in the process of converting the humidity into liquid and storing the liquid and preventing removal of the waste water during hitting and falling down.

### Background of the Related Art

The related art contains casing devices used for humidity eliminators. The humidity eliminator located in box collects the humidity in the air and converts it into liquid. This liquid is collected in a liquid chamber located in the lower part of the box. Humidity eliminating material is located on a plastic perforated part in the currently used boxes. A second perforated part of the same embodiment is used to enclose this part having wide spaces. Since the part and box cover on the water container located on the humidity eliminating material is also of a perforated embodiment, it removes the salt provided in the water container in case of a slight movement.

The parts of the devices used in the related art are located on each other. However, neither there is a part to fix them to each other nor a way to provide their tight fixing to each other during location of the parts.

For that reason, the devices of such embodiment cause several disadvantages during use. Particularly in case of use in halls and similar locations, falling down arising from hitting is encountered frequently. In case of an event of such falling down, the water in the boxes used in the related art spreads over the surface. Therefore, the place where the device falls down gets dirty and must be cleaned. Problem in respect of health is also encountered since the humidity eliminating agent spreads over the surface. The spreading humidity eliminating agent is inhaled directly. It may also contact the irritating liquid spread over the ground. This liquid sometimes spreads over the users and irritates the skin, too. Even the events where the children drink the liquid spread over the ground by the users have been encountered. Because of such problems experienced, the many problems and disadvantages related to humidity eliminating apparatus existing in the related art have been experienced. For that reason the users even prefer not to use the product, which is a considerably serious risk in terms of market of the apparatus.

As a result, the need for humidity eliminating apparatus embodiments fixable to ground eliminating the disadvantages existing in the related art and recovering the deficits in the existing embodiments and developed to integrate them in one product and providing a practical and safe use and inadequacy of existing solutions in the related art have necessitated development in the related art.

### Purpose of the Invention

From the current status of the related art, the purpose of the invention is to disclose a humidity eliminating case fixable to the ground, which recovers the deficits in the current embodiments and integrate them in one product.

The purpose of the invention is to disclose a casing embodiment preventing accidentally spreading of chemical agents converted into liquid.

Another purpose of the invention is to disclose a casing embodiment which is fixable onto the ground where it is located and is hardly displaced as a result of hitting.

In order to achieve all above mentioned advantages which will be understood better from the detailed description given below, in the present invention aiming at providing encapsulation of a chemical agent located generally in the form of a tablet into a chamber/cage and absorbing the humidity into the tablet and dissolution and conversion into liquid upon entrance of humidity air from the porosities located on the chamber and then storing thereof in the casing,
- a humidity eliminating casing apparatus containing adhesive discs providing fixing it onto ground so as to prevent spreading of the chemical agent converted into liquid caused by accidental hitting,
- a humidity absorber casing fixable on the ground preventing spread of liquid on the ground even in case of falling down of the casing apparatus containing agent in liquid form by help of discharge canal cap and feeder walls surrounding the liquid discharge canal and thus preventing ground from getting wet and dirty and contact of cleaning person with chemical agent and getting irritation of skin is realized.

The structural and characteristics features of the invention and all advantages will be understood better in detailed descriptions with the figures given below and with reference to the figures, and therefore, the assessment should be made taking into account the said figures and detailed explanations.

### Figures to describe the Invention

Figure 1 is a perspective view from lower part indicating base of the humidity eliminating casing fixable on the ground being subject of the invention.
Figure 2 is a top perspective view indicating cover part of the humidity eliminating casing fixable on the ground being subject of the invention.
Figure 3 is a two-dimension view divided from the front indicating the humidity eliminating casing fixable on the ground being subject of the invention.
Figure 4 is a two-dimension view with cross-section from the front indicating the humidity eliminating casing fixable on the ground being subject of the invention.

### Part Numbers

- 1.: Cover
- 2.: Discharge canal cover
- 3.: Grid cage
- 3.1: Porosity
- 3.2: Discharge canal
- 3.2.1: Discharge canal intake
- 3.3: Feeder
- 3.4: Liquid discharge canal
- 4.: Liquid chamber
- 4.1: Holder
- 5.: Foot
- 5.1: Feeder
- 5.2: Adhesive disc housing
- 6.: Adhesive disc

### Detailed Description of the Invention

In this detailed description, the humidity eliminating casing being subject of this invention has been disclosed solely for the purpose of better understanding of the subject and described in a manner not causing any restrictive effect.

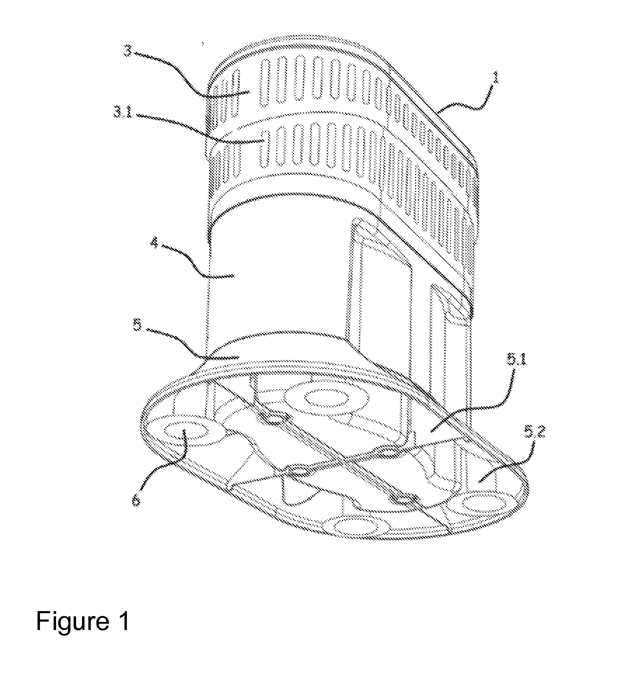

Figure 1 is a perspective view from lower part indicating base of the humidity eliminating casing fixable on the ground being subject of the invention. The figure shows the adhesive disc (6) members provided in the adhesive disc housing (5.2) provided in the foot (5) embodiment containing base part of the humidity eliminating case apparatus. The said adhesive discs (6) are located on four oval edges as per form of casing apparatus. In addition, feeders (5.1) have been provided in order to carry the liquid chamber (4) to be located on the foot (5) in the foot (5) embodiment.

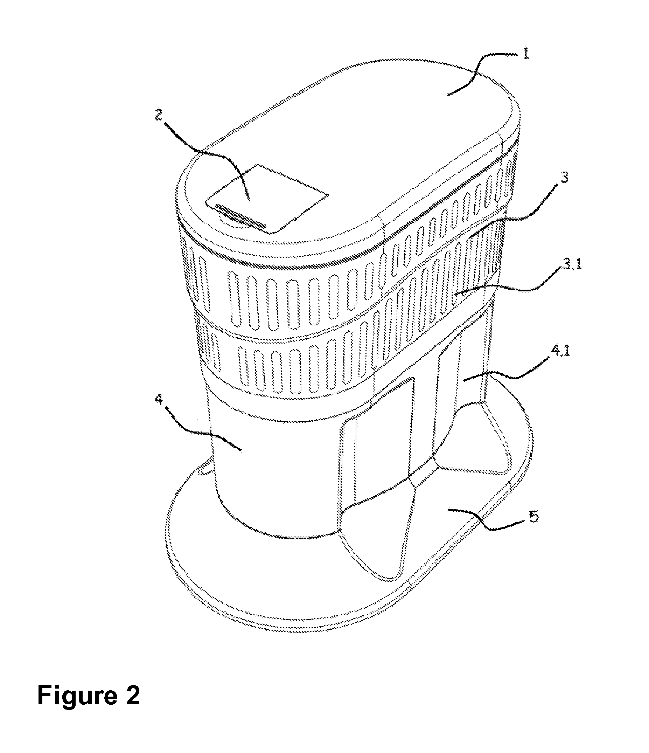

Figure 2 is top perspective view indicating cover (1) part of the humidity eliminating casing fixable on the ground being subject of the invention. As seen from the figure, a cover (1) ceiling has been provided in compatible with the form of casing apparatus. A small square formed discharge canal cover (2) has been located on the said cover (1).

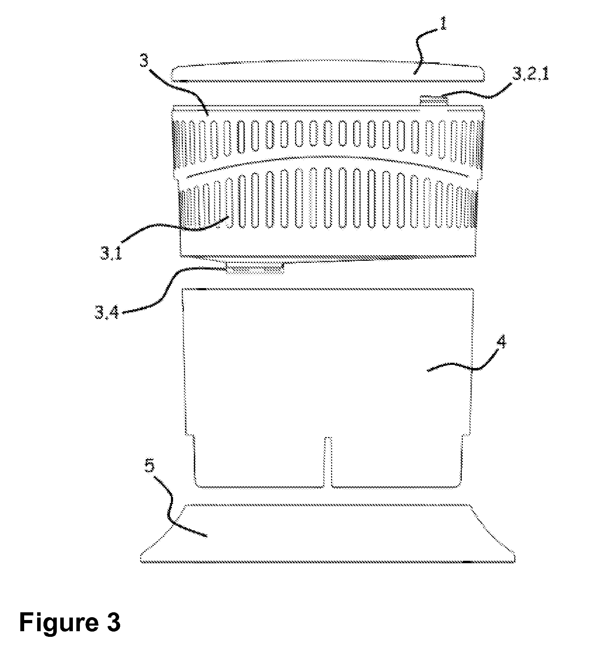

Figure 3 is a two-dimension view divided from the front indicating the humidity eliminating casing fixable on the ground being subject of the invention. As seen from the figure, a grid cage (3) where the chemical humidity holding tablet is located has been provided in the body part of the apparatus. A liquid chamber (4) has been located under the grid cage (3). The form of both embodiments is in the shape of rectangular prism whose edges have been rounded and are interlocking because of its compatibility. As the said liquid chamber (4) is located in the lower part, foot (5) embodiment is integrated into the lower part thereof and it is compatible with the general form. A cover (1) compatible with the general embodiment form has been located on the upper part of the said grid cage (3). In addition, a discharge canal intake (3.2.1) has been provided in the part corresponding to the discharge canal cover (2) on the cover (1) of the grid cage (3). The discharge canal (3.2) in the said grid cage (3) starts there from and extends up to the liquid chamber (4). In addition, a liquid discharge canal (3.4) in a part separated from the said discharge canal (3.2) has been provided in the lower part of the said grid cage (3). In addition, holder (4.1) parts of concave spaces form for holding the humidity collecting apparatus have been provided on the liquid chamber (4) shown in figure 2 in order to provide easy carrying of the humidity eliminating apparatus and easy discharge of the liquid collected in the liquid chamber (4).

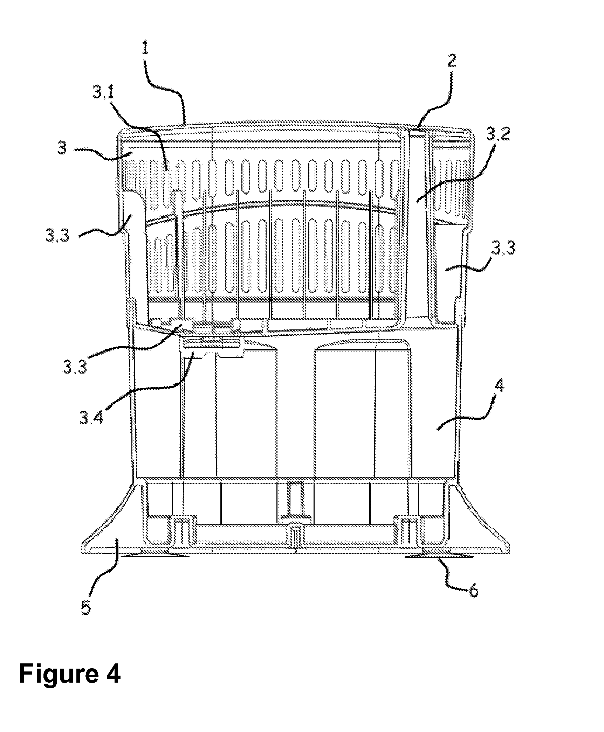

Figure 4 shows a two-dimension view of front cross-section of the humidity eliminating casing fixable on the ground being subject of the invention. As seen from the figure, the discharge canal (3.2) mentioned in the explanation of figure 3 is clearly seen. As its name reflects, feeders (3.3) have been provided in the parts near to edges on the chamber where the tablet of grid cage (3) form is located and in base section where liquid passage should not occur, and porosities (3.1) have been provided on the peripheral surface.

In the light of the figures, the functioning of the invention is as follows. The cover (1) of the humidity eliminator casing fixable on the ground being subject of the invention is opened and the humidity holding tablet is located in the said grid cage (3). Then the cover (1) is closed. The casing of the humidity eliminator being subject of the invention can be carried to and located in any desired place practically. This practical carrying is made by means of holding from the carrying holders (4.1). For fixing it to any desired place, the feet (5) providing stable and solid standing on the ground and preventing falling down and adhesive discs (6) embodiments in the said feet (5) being subject of innovation have been provided. The adhesive discs (6) make flexing under normal conditions in the known way and then discharge part of the air from its inner environment firstly and make flexing by the remaining air and make vacuuming and fix the part connected to the adhesive discs (6) to the related location. As the fixing is realized by use of air pressure, it is not likely to move the humidity holder casing without much intervention from outside. And this is under the scope of the novelty desired in the light of the above purposes.

The humidity holding chemical agent put into the grid cage (3) of the humidity eliminating casing fixable onto ground release saline water content liquid of at most two times of its weight as a result of humidity absorbed from air. Taking into account this quantity in the liquid chamber (4), upon adding of the humidity, volume in the capacity of liquid such as saline water etc. is manufactured. Even in case of conversion of all chemical humidity holding tablet in the humidity eliminating casing apparatus into liquid, liquid is trapped between discharge canal cover (3.2.1) - discharge canal (3.2) - liquid discharge canal (3.4) - liquid chamber (4) and moves in this canal and chambers. Removal of even a drop thereof from the humidity eliminating casing is allowed. This is provided by cover (1) located on the upper part of the apparatus and a discharge canal cover (2) on the cover (1) and fully close position of the said discharge canal intake (3.2.1). For that reason, humidity eliminating casing provides a considerably safe use and does not cause any problem for the user. 360 degree contact of humidity collecting tablet or chemical agents put into the said grid cage (3) with air is provided. In order to provide it, the porosities (3.1) on the surface providing passage of the humidity air into the grid cage (3) is kept open. The flow of liquid formed as a result of collection of humidity by humidity collecting tablet or chemical agent and dissolution thereof into liquid chamber (4) is provided by liquid discharge canal (3.4). Then the feeders (3.3) around the said liquid discharge canal (3.4) prevents return of the liquid to the grid cage (3). When humidity collecting tablet is over and the liquid chamber (4) is fully filled, the adhesive discs (6) are removed manually and the casing apparatus is removed from the location it has been adhered. For discharge of the liquid taking form of waste, the discharge canal cover (2) is opened and casing apparatus is turned upside down and discharge of liquid passing through liquid discharge canal (3.4) is provided from the discharge canal intake (3.2.1). For putting a new chemical agent or tablet into casing apparatus, the cover (1) is fully opened and it is located in the grid cage (3). Keeping the tablet in the grid cage (3) is provided by help of other feeders (3.3) located in the said grid cage (3).

In conclusion, humidity absorbing tablet and dissolved liquid is trapped in the casing apparatus by help of both cover (1) and discharge canal cover (2) unless both covers (1, 2) are opened. In addition, discharge canal (3.2), discharge canal intake (3.2.1) and liquid discharge canal (3.4) also provide discharge and circulation of waste liquid dissolved in the casing apparatus. Humidity absorbing casing apparatus stands fixed in its location by help of adhesive discs (6) located in the adhesive disc housing (5.2) of the said foot (5) part. Thus falling down of the casing apparatus is unlikely unless a severe forcing or severe hitting occurs. Even if it falls down, the covers (1, 2) prevent the flow of the liquid. Moreover, waste liquid cannot return to the grid cage (3) in a damaging quantity by use of waste liquid feeders (3.3).

The protection area of this application has been specified under claims and cannot be limited to the descriptions only given as sampling above. It is clear that any novelty can be provided by a person skilled in the related art by use of the similar embodiments and/or can also apply this embodiment in other areas for similar purposes used in the related art. Therefore, such embodiments will be lack of novelty criteria and particularly exceeding the related art.

## Claims

1. The invention is a humidity eliminating casing consisting of a grid cage (3) for positioning humidity collecting chemical agent in tablet form in general, at least one porosity (3.1) on the surface of the said grid cage (3) in order to provide access of the humid air to the tablet, a liquid chamber (4) to store the waste liquid formed from the tablet dissolved by humidity of the humid air in time and a foot (5) located under the said liquid chamber (4) in order to support and carry the casing apparatus and it is **characterized in that** it consists of;
- at least one adhesive disc (6) located on the said foot (5) in order to fix the humidity eliminating casing on the ground,
- a liquid discharge canal (3.4) in order to carry the waste liquid to the said liquid chamber (4),
- a discharge canal (3.2) in order to discharge the waste liquid from the said liquid chamber (4),
- a discharge canal cover (2) in order to provide discharge of the liquid from the said discharge canal (3.2) only when desired,
- a cover (5) to provide removal of the said humidity absorbing tablet from the grid cage (3) only when desired.

2. A humidity eliminating casing according to claim 1 and it is **characterized in that** the said foot (5) embodiment consists of at least one adhesive disc housing (5.2).

3. A humidity eliminating casing according to claim 1 and it is **characterized in that** it consists of one discharge canal intake (3.2.1) corresponding to the said discharge canal cover (2).

4. A humidity eliminating casing according to claim 1 and it is **characterized in that** it consists of feeder (3.3) around the said liquid discharge canal (3.4).

5. A humidity eliminating casing according to claim 1 and it is **characterized in that** it consists of holder (4.1) located on the said liquid chamber (4).
